# EUROPÄISCHE PATENTSCHRIFT

(11) **EP 1 297 756 B1**
(45) Veröffentlichungstag und Bekanntmachung des Hinweises auf die Patenterteilung: **09.02.2005**
(21) Anmeldenummer: 02020862.5
(22) Anmeldetag: 18.09.2002
(51) Int. Cl.: A23L 1/30, B01J 2/04, C11B 15/00

(54) **Kugelförmige Sterinzubereitungen, deren Herstellung und Verwendung**
Spheric sterol preparations, their use and manufacture
Compositions de stérols sphériques, leurs préparation et utilisation

(30) Priorität: 27.09.2001 US 325348 P
(43) Veröffentlichungstag der Anmeldung: 02.04.2003
(73) Patentinhaber: Cognis Deutschland GmbH & Co. KG, 40589 Düsseldorf (DE)
(72) Erfinder: Gutsche, Bernhard, Dr., 40724 Hilden (DE); Wollmann, Gerhard, Dr., 40923 Hilden (DE); Rigal, Jean, 31170 Tournefeuille (FR); Albiez, Wolfgang, 41468 Neuss (DE); Thiesen, Brian, Bourbonnais, IL 60914 (US); Basso, Yannick, 31600 Muret (FR)

(56) Entgegenhaltungen:
- WO-A-01/00046
- GB-A- 931 147
- US-A- 5 643 604
- US-B1- 6 231 841
- "The Merck Index - 11. Auflage" 1989 , MERCK & CO.,INC. , U.S.A XP002228867 * Seite 1089, Index 6841 * * Seite 1353-1354, Index 8500 *

## Beschreibung

### Gebiet der Erfindung

Die Erfindung betrifft ein Verfahren zur Herstellung vertropfter Sterinzubereitungen mit einer engen Korngrößenverteilung.

### Stand der Technik

Die Verwendung nanoskaliger runder Sterol-Teilchen ist im Stand der Technik bereits bekannt. Sterolteilchen mit einer Größe von 10 bis 300 nm werden beispielsweise gemäß der Internationalen Patentanmeldung **WO 01/00046 A** als Lebensmittelzusatzstoff eingesetzt oder dienen in Kombination mit Sterolestern wie aus dem US-Patent **US 6231841 B** bekannt in kosmetischen Zubereitungen als Konsistenzgeber.

In bisherigen Verfahren werden zur Herstellung von festen Sterinzubereitungen zunächst die wasserhaltigen Sterinkristalle in einem Rührkessel bei Temperaturen über 135 °C aufgeschmolzen und getrocknet. Im Anschluss erfolgt die Konfektionierung dieser Zubereitung über eine gekühlte Schuppenwalze. Die nach diesem Verfahren erhaltenen Schuppen enthalten einen hohen Staubanteil, sind klebrig und ungleichmässig. Diese geschilderten Nachteile haben eine schlechte Rieselfähigkeit und damit Verarbeitung zur Folge. Darüber hinaus lassen sich diese Schuppen nur mit hohem Dispergieraufwand in Rezepturen und Lösungsmitteln lösen. Dementsprechend sollten andere Konfektionierungsformen angestrebt werden.

Das Dokument **EP 737509 B1** beschreibt ein Verfahren zur Herstellung von kristallisierten Perlen bei dem das aufgeschmolzene Produkt in Tropfen zerteilt wird und die Tröpfchen bei einer Temperatur unterhalb der Glasübergangstemperatur des Produktes abgekühlt werden, damit die Tröpfchen durch Verglasung aushärten. Die so verglasten Perlen werden bei einer Temperatur unterhalb der Glasübergangstemperatur gehalten und mit Kristallisationskeimen zusammengebracht, die Perlen durch Temperaturerhöhung über die Glasübergangstemperatur kristallisieren lassen und die Perlen anschließend abgefangen. Kritische Parameter bei diesem Verfahren sind insbesondere das Arbeiten mit einer unterkühlten Schmelze sowie die Verwendung von Kristailisationskeime.

In der US-Anmeldung **US 5643604** wird eine Methode zur Herstellung von Cholesterinkügelchen offenbart, bei der das Cholesterin bei einer Temperatur zwischen 160°C bis 190°C geschmolzen wird und nachfolgend in eine Gefrierkammer mit einer gekühlten Stickstoffatmosphere eingeleitet wird, in der das Cholesterin in Form runder Kugeln erstarrt. Ebenfalls runde Cholesterinhaltige Kügelchen werden durch ein Verfahren gemäß der britischen Patentanmeldung **GB 931147 A** gewonnen, bei dem die aufgeschmolzene cholesterinhaltige Mischung so in einem perforierten Behälter rotiert, dass die Flüssigkeit durch die Löcher des Behälters nach außen geschleudert wird und in der kühleren Außenluft zu Kugeln erstarrt.

Die Aufgabe der vorliegenden Erfindung hat daher darin bestanden, neue Sterinkugeln zur Verfügung zu stellen, welche frei von den geschilderten Nachteilen sind, d.h. eine enge Korngrössenverteilung, einen reduzierten Staubanteil, verminderte Klebrigkeit, eine verbesserte Auflösegeschwindigkeit sowohl in wässrigem wie auch öligem Medium und damit verbesserter Einarbeitung in oberflächenaktiven Zubereitungen, wie vorzugsweise kosmetischen und/oder pharmazeutischen Zubereitungen und Lebensmitteln, aufweisen. Weiterhin soll die Herstellung dieser kugelförmigen Sterine bzw. Sterinperlen ohne Mitverwendung von Kristallisationskeimen möglich sein.

### Beschreibung der Erfindung

Gegenstand der Erfindung ist ein Verfahren zur Herstellung von vertropften Sterinzubereitungen mit einer engen Komgrößenverteilung, bei dem man eine bei Raumtemperatur feste Zubereitung enthaltend ein oder mehrere Sterine als Schmelze mit einer Temperatur, die 5 bis 40 °C über dem Schmelzpunkt der Zubereitung liegt, über einen Lochteller oder eine Düsenplatte zuführt und den Lochteller oder die Düsenplatte zur Vibration anregt, wodurch der Flüssigkeitsfaden der Sterinflüssigkeit immer wieder unterbrochen wird und sich kugelförmige Tropfen ausbilden, denen man ein Kühlmittel entgegen-leitet oder die man mit einem Kühlmittel in Kontakt bringt, welches die kugelförmigen Tropfen zum Erstarren und Abkühlen bringt.

Überraschenderweise wurde gefunden, dass man kugel- bzw. perlenförmige Sterine durch eine Tropfenerzeugung ohne Verwendung von Kristallisationskeimen erhalten kann. Hierbei werden die Sterinzubereitungen als Schmelze in den Kühl- und Erstarrungsapparat über einen Lochteller oder eine Düsenplatte eingebracht. Durch eine angeregte Schwingung wird der Flüssigkeit eine Vibration aufgeprägt, so dass der Flüssigkeitsfaden immer wieder unterbrochen wird und sich kugel- bzw. perlenförmige Tropfen ausbilden. Durch Entgegenleiten eines Kühlmittels bzw. durch Eintropfen in ein Kühlmittel wird die Schmelzwärme abgeführt und die Tropfen erstarren. Vorteilhaft ist insbesondere, dass in Abhängigkeit vom Lochdurchmesser und der Schwingfrequenz des Erregers ein Kornspektrum mit enger Korngrössenverteilung mit geringem Staubanteil eingestellt werden kann. Bei der Herstellung der Kugeln bzw. "Perlen" besteht zudem in der Regel ein breiter Erstarrungsbereich. Ein weiteren Vorteil besteht gegenüber konventionellen Anbietungsformen wie z.B. Schuppen darin, dass die Oberfläche der Tropfen nach dem Erstarren und Abkühlen nicht mehr klebrig sind, die Partikel als frei fliessbare Kugeln bzw. "Perlen" abgefüllt werden können und darüber hinaus eine signifikant verbesserte Löslichkeit sowohl in öligen als wässrigen Medien zeigen.

### Verfahren:

Für der Herstellung der erfindungsgemässen Zubereitungen werden die Sterinzubereitungen als Schmelze in den Kühl- und Erstarrungsapparat über einen Lochteller oder eine Düsenplatte eingebracht. Die Leistung solcher Lochscheiben, die üblicherweise 10 bis 750 Bohrungen aufweisen, kann vorzugsweise im Bereich von 0,3 bis 6 kg/h/Bohrung liegen, der Durchmesser der Bohrungen liegt zwischen 0,15 und 1,2 mm. Dabei werden Tropfen erhalten, die einen Durchmesser vom 1,55- bis 2,0-fachen des Durchmessers der Bohrungen aufweisen.

Durch eine angeregte Schwingung wird der Flüssigkeit eine Vibration aufgeprägt, so dass der Flüssigkeitsfaden immer wieder unterbrochen wird. Es bilden sich aufgrund der Druckverhältnisse Primär und Sekundärtropfen. Auf Grund der Grenzflächenspannung bilden die Tropfen Kügelchen.

Die Schwingungsfrequenz wird so gewählt, dass die normalerweise bei Tropfenabriss entstehenden Sekundärtropfen in den vor oder nachlaufenden Primärtropfen eingezogen werden. Die Frequenz liegt bei allen Verfahren typischerweise im Bereich von 100 bis 40.000 und vorzugsweise 10 bis 200 bis 2000 Hz. Sie kann über eine angeregte Membran, einem schwingenden Stößel, eine vibrierende Giesserplatte bzw. Giessplatte, durch Sonoanregung, durch Schallanregung, durch Pulsation des Feeds, durch eine mit dem Feed gekoppelten angeregten sekundären Flüssigkeit oder einer angeregten Gasschicht erzeugt werden.

Die Schmelze-Tropfen werden anschließend im Erstarrungsapparat durch Kühlmittel zuerst auf Erstarrungstemperatur gekühlt, erstarren und werden auf Austragstemperatur abgekühlt. Den Tropfen wird dabei ein gasförmiges oder einem flüssiges, verdampfendes, Kühlmittel entgegenleitet oder die Tropfen in flüssiges Kühlmittel getropft. Als Kühlmittel werden vorzugsweise Luft, Stickstoff oder Kohlendioxid einsetzt. In einer besonderen Ausführungsform der Erfindung kann das Kühlmittel im gekühlten Kreislauf gefahren werden.

Ein weiterer Vorteil gegenüber den herkömmlichen Verfahren zur Erzeugung von Feststoffen aus Schmelzen besteht ferner darin, dass mit nur geringem Überdruck (typisch: 100 bis 4000 und insbesondere 300 bis 2000 mbar) gearbeitet werden kann. Die Temperatur, mit der die Einsatzstoffe in den Vertropfungsturm gefördert werden, wird durch den Erstarrungsbereich der Sterinzubereitungen begrenzt und liegt im Sinne der Erfindung im Bereich von 110 bis 170 und vorzugsweise 110 bis 150 und insbesondere 130 bis 140°C. Als besonders effektiv haben sich Feedtemperaturen erwiesen, die 5 bis 40, vorzugsweise 10 bis 25 °C über dem Erstarrungspunkt der Einsatzstoffe liegen. Bei diesen Temperaturen liegt die Viskosität der Schmelze in einem Bereich, dass die Sterinzubereitungen schon gut vertropft werden können und gleichzeitig durch Anpassung der Frequenz der Vibration die Sekundärtropfenbildung minimiert werden kann. Im Sinne der Erfindung werden dementsprechend die Zubereitung vorzugsweise bei einer Viskosität kleiner 500 und insbesondere kleiner 100 mPas (Brookfield, Spindel 1, 10 Upm) bei einer Temperatur, die 5 bis 40 °C oberhalb des Schmelzpunktes liegt, vertropft.

Die Tropfen bzw. Perlen sind annähernd kugelförmig und weisen in Abhängigkeit der Öffnungen der Lochplatte (Bohrungen) und der Frequenz durchschnittliche Durchmesser im Bereich von 0,23 bis 2,4 mm aus.

Die Herstellung der erfindungsgemäßen Sterine kann nach drei verschiedenen Verfahren durchgeführt werden. Im nachfolgenden werden die Besonderheiten zu den zuvor beschriebenen Verfahrensparametem näher erläutert.

### Verfahren A: Vertropfen nach dem Verfahren "Droppo-line" in einem langen Fallturm

Die im Sinne der Erfindung durchgeführte Vertropfung mit Hilfe einer Gießerplatte bzw. Gießplatte mit angeregter Membran wird beispielsweise von der Firma Rieter-Automatik und der Firma Brace unter der Bezeichnung "Droppo Line" vertrieben. Im Sinne dieses Verfahrens sind solche Gießerplatten bevorzugt, welche aus einer beheizbaren Ober- und Unterplatte bestehen. Die Unterplatte ist in der Regel als Lochscheibe geformt, durch deren Öffnungen oder Kanäle bzw. Kapillardüsen oder Vertropfungsröhrchen die Tropfen dann in den Vertropfungsturm gelangen.

Die Schwingungsfrequenz kann über eine angeregte Membran, einem schwingenden Stößel, eine vibrierende Platte oder Sonoanregung erzeugt werden.

Die Tropfen fallen im Fallturm turbulenzarm senkrecht herunter. Die Kühlung kann zwar grundsätzlich auch mit kalter Flüssigkeit (z.B. Vertropfen in Wasser) oder kalter, verdampfender Flüssigkeit (Ver dampfen von flüssigem Stickstoff oder Kohlendioxid) erfolgen, aus praktischen Gründen ist jedoch eine Kühlung im Vertropfungsturm mit kaltem Gas im Gegenstrom empfehlenswert, wie dies im Stand der Technik hinreichend beschrieben wird. Das Kühlgas wird als gekühltes Frischgas oder als gekühltes Kreisgas zugeführt. Als Kühlgas kann neben gasförmiger Luft natürlich auch Inertgas wie z.B. Stickstoff oder Kohlendioxid eingesetzt werden.
Besonders an diesem Verfahren ist, dass das Abkühlen auf Erstarrungstemperatur, d.h. das Erstarren und das Nachkühlen auf Austragstemperatur, zusammen in einem langen Fallturm mit kaltem Gas als direktes Wärmeübertragungsmedium erfolgt.

Die durch angepasste Vibration vertropften und erstarrten Tropfen sind kugelförmig und gleichmäßig ohne Lunker und weisen in Abhängigkeit der Öffnungen in der Lochplatte, der Viskosität, der Grenzflächenspannung und der Frequenz Durchmesser im Bereich vom 1,55- bis 2,0-fachen des Durchmessers der Bohrungen auf. Der Staubanteil, d.h. Partikel mit Teilchengrößen kleiner 0,3 mm ist maximal 1/1000 der größeren Partikel.

### Verfahren B: Vertropfen nach dem Verfahren "Jet-priller" in einem kurzen Fallturm

Zweistufiges Verfahren zum Erstarren und Abkühlen von Tropfen: Im ersten Schritt wird durch Abschrecken mit flüssigem, verdampfenden Medium die Oberfläche der Kugeln verfestigt. Im zweiten Schritt erfolgt das restliche Erstarren und Nachkühlen in einem Nachkühlapparat.

Eine Vertropfung kann ebenfalls mit Hilfe einer Giesserplatte bzw. Giessplatte mit angeregter Membran, wie sie beispielsweise von der Firma GMF-Gouda unter der Bezeichnung "Jet-priller" vertrieben wird, durchgeführt werden.

Die Sterin-Schmelze wird durch kontrollierten Überdruck von 300 bis 2000 mbar durch ein oder mehrere Tropfenbildungssysteme geleitet, die den kontinuierlichen Produktstrom in Tropfen von. 1,6- bis 1,9-fachen des Düsendurchmessers zerteilen. Die Form der Tropfen wird durch die Eindüsung von flüssigem, verdampfenden Stickstoff oder Kohlenstoff in einem speziellen Prill-Erstarrungsrohr (1 bis 10, vorzugsweise 1 bis 2 m Fallhöhe) durch cryogenens Kühlen im Gleichstrom stabilisiert.

Die Abfuhr der Restkristallisationswärme und das Nachkühlen und Abführen der Restwärme zur vollständigen Kristallisation erfolgt in einem rotierenden Wirbelschicht mit gekühltem Gas, das vorzugsweise im Kreis gefahren wird und vorzugsweise das gleiche Gas ist, bzw. sein kann wie zum Abschrecken verwendet wird. In der Wirbelschicht wird es auch auf die Produktentnahmetemperatur abgekühlt.

### Verfahren C: Vertropfen nach dem Verfahren "Cryogen Rapid Pelletizer" der Fa. Messer

Einstufiges Verfahren zum Erstarren und Abkühlen von Tropfen durch Eintropfen der flüssigen Schmelze direkt in einen Wärmeträger z.B. flüssigem Stickstoff

Die Schmelze wird direkt in flüssigen Stickstoff vertropft. Auf einem schrägen Rutschbett rollen die Perlen im flüssigen Stickstoff herunter, kühlen ab, erstarren und werden nachgekühlt. Nach Abtrennung der Perlen vom flüssigen Stickstoff auf einem Siebband wird der restliche flüssige Stickstoff in den Prozess recycliert.

### Sterine

Unter Sterinen sind im Sinne der Erfindung solche Steroide zu verstehen, die nur am C-3 eine Hydroxylgruppe, sonst aber keine funktionellen Gruppen tragen. Es handelt sich also formal um Alkohole, weswegen diese Gruppe von Verbindungen auch gelegentlich als Sterole bezeichnet werden. In der Regel besitzen die Sterine 27 bis 30 Kohlenstoffatome und eine Doppelbindung in 5/6, gegebenenfalls 7/8, 8/9 oder anderen Positionen. Als Ausgangsstoffe kommen jedoch neben diesen ungesättigten Spezies auch die durch Härtung erhältlichen gesättigten Verbindungen in Frage.

Im Sinne der Erfindung kommen Sterine in Frage, die aus Naturprodukten wie beispielsweise Soja-, Raps-, Sonnenblumen-, Kokos-, Palmkern- sowie Palmöl gewonnen werden. Vorzugsweise werden als Sterine Sigmasterin, Campesterin, Sitosterin Brassicasterine, Stigmasterin, D5 Avenasterin, D7-Avenasterin, Ergosterin, Citrostadienol, Cholesterin, Lanosterinen, Spongosterinen, en, Fungisterinen, Stellasterinen, Zymosterinen sowie deren Gemische und insbesondere Phytosterine auf Basis Ergosterinen, Avenasterinen (D5 und D7 Avenasterin), Campesterinen, Stigmasterinen, Sitosterinen Brassikasterine, Citrostandiole, Sigmastandiole sowie deren Gemische eingesetzt. Weiterhin können ebenfalls alle weiteren dem Fachmann bekannten Phytosterine verwendet werden.
Ihre Zusammensetzung wird in "Sterinzusammensetzung und Steringehalt in 41 verschiedenen pflanzlichen und tierischen Fetten", E. Homberg; B. Bielefeld; Fat. Sci.Technol. *91* Jahrg. Nr. 1, 1989, beschrieben.

In der vorliegenden Erfindung werden vorzugsweise Zubereitungen ein oder mehreren Sterinen mit einem Aktivsubstanzgehalt von 70 bis 99,9, vorzugsweise 75 bis 98 und insbesondere 80 bis 95 Gew.-% eingesetzt.

### Gewerbliche Anwendbarkeit

In einer besonderen Ausgestaltungsform der Erfindung ist es auch mögiich, dass die Sterinzubereitungen zusammen mit ein oder mehreren, bei Raumtemperatur festen Hilfs- und Zusatzstoffen vertropft werden und dann als Mischung, sogenannten Compounds", in Lebensmittel- beispielsweise und/oder pharmazeutischen Zubereitungen eingesetzt werden. Die erfindungsgemäßen Phytosterine (Phytosterole) können als Nahrungsmittelzusätze zur Regulierung des Cholesterinspiegels zugesetzt werden. Sie haben sowohl lipophile (bedingt durch das ausgedehnte Kohlenwasserstoffgerüst) als auch hydrophile Eigenschaften durch die alkoholische OH-Gruppe.

In kosmetischen Anwendungen, wie z.B. O/W- als auch in W/O-Emulsionen, weisen sie konsistenzgebende und emulgierende Eigenschaften auf. Als Ersatz für Kortikosteride kommen die Phytosterole zur Behandlung von Neurodermitis wie z.B. bei der Abheilung der Windel-Dermatitis zur Anwendung. Sie wirken Sonnenbrand entzündungsreduzierend und beschleunigen die Hautregeneration. In Haarpflegemitteln können die erfindungsgemäßen Phytosterole als Avivagemittel, z.B. zur Vermeidung der elektrostatischen Aufladung und Erhöhung des Haarglanzes Anwendung finden.

Ein weiteres mögliches Einsatzgebiet der Phytosterole ist die Weiterverarbeitung zu Vitamin D2, und zu Steorid-Hormonen. Die ethoxylierten Phytosterole mit 5 bis 10 EO könnten sich als nichtionische Co-Emulgatoren für die Herstellung von W/O- bzw. O/W-Emulsionen, insbesondere für PIT-Emulsionen, anbieten. Durch Zusatz einer genauen Anzahl an EO-Gruppen lässt sich der Grad der Hydrophilierung einstellen. Eingearbeitet in Cremes bewirken die ethoxylierten Phytosterole ein angenehmes Hautgefühl durch Anstieg der Hautfeuchtigkeit und der Oberflächenlipide.

Die vertropften Sterine ggf. in Abmischung mit weiteren Hilfs- und Zusatzstoffen, eignen sich daher als Lebensmittelzusatz sowie als Emulgator und/oder Konsistenzgeber.

### Beispiele

**Beispiel 1.** In einer "Droppo-Line" Anlage der Fa. Rieter Automatik GmbH mit 500 µm-Düsen wurden kontinuierlich Generol® 95 ex Raps (84 Gew.-% Aktivsubstanz, 0-1,5 Gew.-% Stigmasterin, 30-45 Gew.-% Campesterin, 40-60 Gew.-% Sitosterrin, 8-18 Gew.-% Brassicasterin) Schmelztemperatur 138 °C) der Firma Cognis mit einem Durchsatz Geschwindigkeit von 1,6 kg/h/Loch vertropft. Ausgehend von einer Vertropfungstemperatur von 165 °C stellte sich eine Produkttemperatur von 22 °C ein. Das Abkühlen erfolgte mit 12 bis 16 °C kalter Luft auf einer Fallhöhe von 23 m. Es wurden staubfreie, rieselfähige und nicht klebrige Sterinperlen mit gleichmässiger Korngrössenverteilung erhalten. Die mittlere Partikelgrösse betrug dabei das 1,65-fache des Düsendurchmessers.

**Beispiel 2.** In einer "Droppo-Line" Anlage der Fa. Rieter Automatik GmbH mit 650 µm-Düsen wurden kontinuierlich Generol® 95 ex Raps der Firma Cognis (siehe Beispiel 1) mit einem Durchsatz von 3,3 kg/h/Loch vertropft. Ausgehend von einer Vertropfungstemperatur von 165 °C stellte sich eine Produkttemperatur von 24 °C ein. Das Abkühlen erfolgte mit 12 bis 16 °C kalter Luft auf einer Fallhöhe von 23 m. Es wurden staubfreie, rieselfähige und nicht klebrige Sterinperlen mit gleichmässiger Komgrössenverteilung (> 95,1 % eine Grösse von mind. 1000 µm) erhalten. Die mittlere Partikelgrösse 1030 µm.

**Beispiel 3.** In einer "Droppo-Line" Anlage der Fa. Rieter Automatik GmbH mit 800 µm-Düsendurchmesser wurden kontinuierlich Generol® 95 ex Raps der Firma Cognis (siehe Beispiel 1) mit einem Durchsatz von 4,8 kg/h/Loch vertropft. Ausgehend von einer Vertropfungstemperatur von 165 °C stellte sich eine Produkttemperatur von 51 °C ein. Das Abkühlen erfolgte mit 12 bis 16 °C kalter Luft auf einer Fallhöhe von 23 m. Es wurden staubfreie, rieselfähige und nicht klebrige Sterinperlen mit gleichmässiger Korngrössenverteilung erhalten. Die mittlere Partikelgrösse betrug 1520 µm. 88 % der Partikel lag im Kornklassenbereich zwischen 1250 µm und 1600 µm.

**Beispiel 4.** In einer "Droppo-Line" Anlage der Fa. Rieter Automatik GmbH mit 120 Düsen mit einem Durchmesser von 500 µm wurden Generol® 100 ex Soja der Fima Cognis (95 Gew.-% Aktivsubstanzgehalt; 20 Gew.-% Stigmasterin, 24 Gew.-% Campestertin, 47 Gew.-% Sitosterin und 4 Gew.-% Brassicasterin; Schmelztemperatur 111 bis 120 °C) mit einem Durchsatz von 104 kg/h/Platte vertropft. Ausgehend von einer Vertropfungstemperatur von 153 °C stellte sich eine Produkttemperatur von 24 °C ein. Das Abkühlen erfolgte mit 5 °C kalter Luft auf einer Fallhöhe von 11 m. Es wurden staubfreie, rieselfähige und nicht klebrige Sterinperlen mit gleichmässiger Korngrössenverteilung (99,7 % eine Grösse von 800 µm) erhalten. Die mittlere Partikelgrösse betrug dabei das 1,62-fache des Düsendurchmessers.
**Beispiel 5.** In einer "Droppo-Line" Anlage der Fa. Rieter Automatik GmbH mit 120 Düsen mit einem Durchmesser von 600-µm wurden kontinuierlich Generol® 100 ex Soja der Firma Cognis (siehe Beispiel 4) mit einem Durchsatz von 283 kg/h/Platte vertropft. Ausgehend von einer Vertropfungstemperatur von 147 °C stellte sich eine Produkttemperatur von 48 °C ein. Das Abkühlen erfolgte mit 25 °C kalter Luft auf einer Fallhöhe von 11 m.
Es wurden staubfreie, rieselfähige und nicht klebrige Sterinperlen mit gleichmässiger Komgrössenverteilung Die mittlere Partikelgrösse betrug 1036 µm. 91 % der Partikel lag im Komklassenbereich zwischen 800 µm und 1250 µm.

**Beispiel 6.** In einer "Jet-Priller" Anlage der Fa. GMF Gouda mit 200 Düsen mit einem Durchmesser von 500 µm- wurden Generol® 90 ex Raps der Firma Cognis (88 Gew.-% Aktivsubstanz, 0-1,5 Gew.-% Stigmasterin, 30-45 Gew.-% Campesterin, 40-60 Gew.-% Sitosterrin 8-18 Gew.-% Brassicasterin; Schmelztemperatur 130 bis 140 °C) mit einem Durchsatz von 360 kglh/Platte und einer Vertropfungstemperatur von 152 °C vertropft und mit 160 kg/h flüssigem Stickstoff in einem 2 m hohen Turm im Gleichstrom abgeschreckt. Die Restwärme wurde in einem zirkulierenden Fliessbett mit durch flüssigem Stickstoff gekühltem Kreisgas abgeführt bis das Produkt am Auslauf eine Temperatur von 27 °C aufwies. Durch Restwärme im Produkt erwärmte es sich im Gebinde auf 34 °C. 97 % des Produktes war größer 600 µm.
Lösungsverhalten der vertropften Sterine im Vergleich zu geschuppten Sterinen in verschiedenen Lösungsmitteln:

2 g Generol 100 aus Beispiel 4, das mit 120 Düsen und 500 µm Düsendruchmesser vertropft wurde, wurde im Vergleich mit Schuppenware in 100 g Lösemitteln im Becherglas mit Magnetrührer, Stufe 3 gelöst.
(1) Die Lösezeit im unpolaren Lösemittel sank bei vertropften Partikeln auf die Hälfte gegenüber Schuppenware.
(2) Die Lösezeit in einem langkettigen bzw. kurzkettigem Öl (50°C) sank bei vertropften Partikeln auf 63-65 % gegenüber Schuppenware.

| | **Temperatur [°C]** | **Lösezeit + General 100 [min:sec]** | |
|---|---|---|---|
| **Lösungsmittel** | | **Schuppen** | **Prills [810µm]** |
| Dichlormethan | 20 | 00:02:05 | 00:01:10 |
| Sonnenblumenöl | 50 | 00:33:10 | 00:20:50 |
| Tri-caprylat | 50 | 00:20:20 | 00:13:20 |

## Patentansprüche

1. Verfahren zur Herstellung von vertropften Sterinzubereitungen mit einer engen Korngrößenverteilung, bei dem man eine bei Raumtemperatur feste Zubereitung enthaltend ein oder mehrere Sterine als Schmelze mit einer Temperatur, die 5 bis 40 °C über dem Schmelzpunkt der Zubereitung liegt, über einen Lochteller oder eine Düsenplatte zuführt und den Lochteller oder die Düsenplatte zur Vibration anregt, wodurch der Flüssigkeitsfaden der Sterinflüssigkeit immer wieder unterbrochen wird und sich kugelförmige Tropfen ausbilden, denen man ein Kühlmittel entgegenleitet oder die man mit einem Kühlmittel in Kontakt bringt, welches die kugelförmigen Tropfen zum Erstarren und Abkühlen bringt.

2. Verfahren nach Anspruch 1, **dadurch gekennzeichnet, dass** man den Tropfen ein gasförmiges oder einem flüssiges, verdampfendes, Kühlmittel entgegenleitet oder die Tropfen in flüssiges Kühlmittel tropft.

3. Verfahren nach den Ansprüchen 1 und/oder 2, **dadurch gekennzeichnet, dass** man als Kühlmittel Luft, Stickstoff oder Kohlendioxid einsetzt.

4. Verfahren nach mindestens einem der Ansprüche 1 bis 3, **dadurch gekennzeichnet, dass** man Sterine einsetzt, die ausgewählt sind aus der Gruppe, die gebildet wird von Sigmasterin, Campesterin, Sitosterin Brassicasterine, Stigmasterin, D5-Avenasterin, D7-Avenasterin, Ergosterin, Citrostadienol, Cholesterin, Lanosterinen, Spongosterinen, Fungisterinen, Stellasterinen, Zymosterinen, sowie deren Gemische

5. Verfahren nach mindestens einem der Ansprüche 1 bis 4, **dadurch gekennzeichnet, dass** man Zubereitungen mit einem Erstarrungsbereich von 110 bis 170 °C einsetzt.

6. Verfahren nach mindestens einem der Ansprüche 1 bis 5, **dadurch gekennzeichnet, dass** man die Zubereitung bei einer Viskosität kleiner 500 mPas (Brookfield, Spindel 1, 10 Upm) bei einer Temperatur, die 5 bis 40 °C oberhalb des Erstarrungspunktes liegt, vertropft.

7. Verfahren nach mindestens einem der Ansprüche 1 bis 6, **dadurch gekennzeichnet, dass** man Zubereitungen mit einem Aktivsubstanzgehalt von 70 bis 99,9 Gew.% einsetzt.

## Claims

1. A process for the production of droplet-like sterol preparations with a narrow particle size distribution, in which a preparation solid at room temperature and containing one or more sterols is passed as a melt with a temperature 5 to 40°C above the melting point of the preparation through a perforated disk or through a die plate and the perforated disc or the die plate is made to vibrate, so that the liquid strand of the sterol liquid is repeatedly interrupted and spherical or bead-like droplets are formed and the droplets are exposed to a cooling medium flowing in countercurrent to them or are contacted with a cooling medium which solidifies and cools them.

2. A process as claimed in claim 1, **characterized in that** the droplets are exposed to a gaseous or a liquid, evaporating cooling medium flowing in countercurrent or are introduced into liquid cooling medium.

3. A process as claimed in claims 1 and/or 2, **characterized in that** air, nitrogen or carbon dioxide is used as the cooling medium.

4. A process as claimed in at least one of claims 1 to 3, **characterized in that** sterols selected from the group consisting of sigmasterol, campesterol, sitosterol, brassicasterols, stigmasterol, D5 avenasterol, D7 avenasterol, ergosterol, citrostadienol, cholesterol, lanosterols, spongosterols, fungisterols, stellasterols, zymosterols and mixtures thereof are used.

5. A process as claimed in at least one of claims 1 to 4, **characterized in that** preparations with a solidification range of 110 to 170°C are used.

6. A process as claimed in at least one of claims 1 to 5, **characterized in that** the preparation is converted into droplets at a viscosity below 500 mPas (Brookfield, spindle 1, 10 r.p.m.) and at a temperature 5 to 40°C above the solidification point.

7. A process as claimed in at least one of claims 1 to 6, **characterized in that** preparations with an active substance content of 70 to 99.9% by weight are used.

## Revendications

1. Procédé de production de préparations de stérol égouttées avec une étroite répartition granulométrique,
selon lequel
on introduit une préparation solide à la température ambiante contenant un ou plusieurs stérols sous forme de masse fondue à une température qui se situe entre 5 et 40°C au-dessus du point de fusion de la préparation, à travers un plateau à trous ou une plaque à buses, et l'on vibrer le plateau à trous ou la plaque de buse, de sorte que les filets liquides de stérol soient constamment interrompus et forment des gouttes sphériques, auxquelles on oppose un agent réfrigérant ou que l'on met en contact avec un agent réfrigérant qui entraîne une solidification et un refroidissement des gouttes sphériques.

2. Procédé selon la revendication 1,
**caractérisé en ce qu'**
on oppose aux gouttes un agent réfrigérant gazeux ou liquide, se vaporisant, ou on verse les gouttes dans un agent réfrigérant liquide.

3. Procédé selon les revendications 1 et/ou 2,
**caractérisé en ce qu'**
on utilise comme agent réfrigérant l'air, l'azote ou le dioxyde de carbone.

4. Procédé selon au moins une des revendications 1 à 3,
**caractérisé en ce qu'**
on utilise des stérols choisis dans le groupe formé par le sigmastérol, le campestérol, le sitostérol, le brassicastérol, le stigmastérol, le D5-avenastérol, le D7-avenastérol, l'ergostérol, le citrostadiénol, le cholestérol, les lanostérols, les spongostérols, les fungistérols, les stellastérols, les cymostérols, ainsi que leurs mélanges.

5. Procédé selon au moins une des revendications 1 à 4,
**caractérisé en ce qu'**
on utilise des préparations ayant un intervalle de solidification allant de 110°C à 170°C.

6. Procédé selon au moins une des revendications 1 à 5,
**caractérisé en ce que**
lors de l'égouttage la préparation a une viscosité inférieure à 500 mPas (Brookfield, arbre 1, 10 tpm) et une température qui se situe entre 5 et 40°C au-dessus du point de solidification.

7. Procédé selon au moins une des revendications 1à 6,
**caractérisé en ce qu'**
on utilise des préparations ayant une teneur en substance active allant de 70 à 99,9 % en poids.
